# EUROPÄISCHE PATENTANMELDUNG

(11) **EP 1 026 376 A2**
(43) Veröffentlichungstag der Anmeldung: **09.08.2000**
(21) Anmeldenummer: 00101731.8
(22) Anmeldetag: 28.01.2000
(51) Int. Cl.: F01N 7/08, F16L 27/11

(54) **Abkoppelelement zur Abkopplung von Schwingungen**

(30) Priorität: 29.04.1999 DE 29907590 U; 05.02.1999 DE 29901957 U
(71) Anmelder: Witzenmann GmbH Metallschlauch-Fabrik Pforzheim, D-75175 Pforzheim (DE)
(72) Erfinder: Jenne, Ekkehard, 75438, Knittlingen (DE); Koob, Michael, 81739 München (DE)
(74) Vertreter: Kaiser, Magnus, Dipl.-Phys.

(57) **Zusammenfassung**

Es wird ein Abkoppelelement zur Abkopplung von Schwingungen in einer Abgasleitung eines Verbrennungsmotors vorgeschlagen, mit einem schraubengangförmigen oder ringgewellten, metallischen Balg (3), der zwischen einem stromaufwärts angeordneten, ersten Leitungsteil (1) und einem stromabwärts angeordneten, zweiten Leitungsteil (2) eingesetzt ist. Um eine gute Entkopplungswirkung mit leichter Montierbarkeit und Reparaturfreundlichkeit zu vereinen, ist das Abkoppelelement derart ausgestaltet, dass das stromaufwärts angeordnete, erste Leitungsteil (1) im Bereich seines an den Balg anzuschließenden Endes mit einem Ringwulst (7) versehen ist, dass sich das erste Leitungsteil (1), stromabwärts des Ringwulstes, in ein in den Balg hineinreichendes, gegenüber den Innenwellen des Balgs berührungsloses Flammrohr (9) fortsetzt, dass im Übergangsbereich zwischen Ringwulst (7) und Flammrohr (9) eine Zentrierfläche (14) vorgesehen ist und dass der Balg am Ringwulst mittels einer Klemmverbindung lösbar mit dem ersten Leitungsteil verbunden ist, während er an der Zentrierfläche anliegt.

## Beschreibung

Die Erfindung betrifft ein Abkoppelelement zur Abkopplung von Schwingungen in einer Abgasleitung eines Verbrennungsmotors, mit einem schraubengangförmigen oder ringgewellten, metallischen Balg, der zwischen einem stromaufwärts angeordneten, ersten Leitungsteil und einen stromabwärts angeordneten, zweiten Leitungsteil eingesetzt ist.

Bei Abgasleitungen von Kraftfahrzeugen ist es bekannt, in diese ein flexibles Leitungselement in Form eines gewellten Balges als Zwischenstück einzusetzen, um Bewegungen und Schwingungen aufzunehmen und von der Weiterleitung an benachbarte Bauteile abzukoppeln. Derartige Bewegungen und Schwingungen ergeben sich von Seiten der elastisch gelagerten Antriebsmaschine, infolge von Lastwechselreaktionen im normalen Fahrbetrieb oder auch aus temperaturbedingten Längenänderungen innerhalb der Abgasleitung. Die Weiterleitung dieser Bewegungen und Schwingungen an das Fahrzeug soll soweit wie möglich unterbunden werden, um die Lebensdauer der Abgasanlage zu erhöhen und die unerwünschte Weiterleitung von Körperschall sowie Abstrahlung von Luftschall zu verhindern.

Ein Beispiel eines solchen flexiblen Leitungselements für Abgasleitungen von Kraftfahrzeugen ist etwa der Gebrauchsmusterschrift DE 296 09 293 U1 zu entnehmen. Das dort beschriebene Leitungselement wird mit den stromaufwärts und stromabwärts liegenden Leitungsteilen fest verbunden, üblicherweise mittels einer Schweißverbindung. Zur Abstützung in axialer Richtung ist der Balg von einem an beiden Balgenden festgelegten Gestrickeschlauch umgeben. In der genannten Gebrauchsmusterschrift wird darüber hinaus noch vorgeschlagen, den Gestrickeschlauch zusätzlich mit einem Geflechtsschlauch zu umgeben.

Ein solches bekanntes Abkoppelelement ist zwar gasdicht und eigenstabil, jedoch muss die Montage dieses Leitungselements in die Abgasanlage beim Kraftfahrzeughersteller sehr sorgfältig durchgeführt werden; die Festlegung der Anschlussenden des Balgs darf nur innerhalb enger Toleranzen vorgenommen werden. Auch das Ersetzen eines möglicherweise schadhaft gewordenen Balges erfordert ein genaues Arbeiten der damit betrauten Werkstatt sowie gute Fertigkeiten in der Metallbearbeitung.

Alternativ zum Festeinbau eines eben erwähnten Leitungselements nach dem Stand der Technik ist es beispielsweise aus der DE 35 42 684 A1 bekannt, den Auspuffkrümmer eines Kraftfahrzeugmotors lösbar mit einem nachfolgenden Balg zu verbinden. In dieser Schrift wird die Verbindung mittels eines Dichtringes aus schwach vorgepresstem Material wie Metalldrähten oder Metalispänen vorgenommen, der auf dem zylindrisch auslaufenden Rohrende angeordnet wird und an den ein abgewinkelter Bund des Balgs angelegt wird, wobei eine Profilschelle den Bund mitsamt dem Dichtring auf dem Rohrende verspannt. Es hat sich allerdings gezeigt, dass die Entkopplungswirkung einer solchen lösbaren Konstruktion verbesserungsfähig ist. Auch kann ein Balg mit guter Entkopplungswirkung kaum auf diese Weise mit dem Rohrende eines motornahen Leitungsteils einer Abgasanlage verbunden werden.

Der vorliegenden Erfindung liegt daher die Aufgabe zugrunde, ein Abkoppelement zur Abkopplung von Schwingungen in einer Abgasleitung eines Verbrennungsmotors mit schraubengangförmigem oder ringgewelltem metallischen Balg vorzuschlagen, das eine gute Entkopplungswirkung mit leichter Montierbarkeit und Reparaturfreundlichkeit vereint.

Diese Aufgabe ist durch ein Abkoppelelement mit den Merkmalen des beigefügten Schutzanspruches 1 gelöst.

Vortèilhafte Ausgestaltungen und Weiterbildungen der Erfindung sind in den Ansprüchen 2 bis 11 niedergelegt.

Erfindungsgemäß ist ein Abkoppelelement der eingangs genannten Art also derart ausgestaltet, dass das stromaufwärts angeordnete, erste Leitungsteil im Bereich seines an den Balg anzuschließenden Endes mit einem Ringwulst versehen ist, dass sich das erste Leitungsteil, stromabwärts des Ringwulstes, in ein in den Balg hineinreichendes, gegenüber den Innenwellen des Balgs berührungsloses Flammrohr fortsetzt, dass im Übergangsbereich zwischen Ringwulst und Flammrohr eine Zentrierfläche vorgesehen ist, und dass der Balg am Ringwulst mittels einer Klemmverbindung lösbar mit dem ersten Leitungsteil verbunden ist, während er an der Zentrierfläche anliegt.

Der Ringwulst am ersten Leitungsteil ermöglicht eine sehr leichte Montage des Abkoppelelementes, wobei der Monteur nicht auf die genaue Lage der Klemmverbindung achten muss, da diese durch den Ringwulst vorgegeben ist, und stellt auch später eine leichte Lösbarkeit zu Reparaturzwecken sicher.

Stromabwärts des Ringwulstes setzt sich das erste Leitungsteil in ein Flammrohr fort, das in den Balg hineinreicht und insoweit als Hitzeschutz für den Balg und, da die Wellung des Balges zu Strömungsturbulenzen führen könnte, zur besseren Strömungsführung dient. Das Flammrohr weist dabei einen derart dimensionierten Außendurchmesser auf, dass es die Innenwellen des Balgs nicht berührt, und zwar auch dann nicht, wenn aufgrund von Relativbewegungen innerhalb der Abgasanlage Angularbewegungen des Balges auftreten. Nachdem das Flammrohr als Fortsetzung des stromaufwärts angeordneten, ersten Leitungsteils ausgebildet ist, ist dessen Lage relativ zum ersten Leitungsteil unveränderlich, so dass der Balg einfach über das Flammrohr gestülpt und an der Klemmverbindung festgelegt werden kann. Die erfindungsgemäß außerdem vorgesehene Zentrierfläche gewährleistet dabei eine in jedem Fall exakte und dennoch leichte Montage, wobei der zur Vermeidung von Klappergeräuschen notwendige Abstand zwischen dem Flammrohr und den Innenwellen des Balgs selbsttätig eingehalten wird.

Die Zentrierfläche erzwingt schließlich im Zusammenwirken mit dem Ringwulst eine Zentrierung des Balgs relativ zum ersten Leitungsteil in allen drei Raumrichtungen. Fehler durch nicht exaktes Arbeiten bei der Montage werden also per se weitgehend ausgeschlossen.

Bevorzugterweise ist das Flammrohr am ersten Leitungsteil einstückig angeformt, wobei es in der Regel einen gegenüber dem ersten Leitungsteil verkleinerten Außenradius aufweisen wird.

Die Klemmverbindung des Balgs am ersten Leitungsteil kann in üblicher Weise mittels einer passend auf den Ringwulst aufsetzbaren Profilschelle vorgenommen werden. Zweckmäßigerweise wird der Ringwulst dabei als V-Bord und die Profilschelle als V-Schelle ausgebildet. Die Klemmverbindung kann dann in einfacher Weise dadurch gasdicht ausgeführt werden, dass der Balg an seinem zum ersten Leitungsteil weisenden Ende mit einem kegelförmig nach außen weisenden, aufgebördelten umlaufenden Bund versehen wird, wobei der Ringwulst des ersten Leitungsteils eine passende konische Anlagefläche für den Bund aufweist und der Bund so durch Aufsetzen und Spannen der Profilschelle mit dem Ringwulst verspannbar ist.

Die konische Anlagefläche einer derart ausgeführten Klemmverbindung kann als Teil der Zentrierfläche dienen, denn die Anlage des aufgebördelten Bundes des Balgendes an eine solche Kegelfläche stellt an sich schon die erfindungsgemäß erwünschte Zentrierung in allen drei Raumrichtungen sicher.

Um die Montage des Abkoppelelements zu erleichtern und deren Genauigkeit zu erhöhen, umfasst die Zentrierfläche vorzugsweise eine zwischen dem Ringwulst und dem Flammrohr angeordnete, zylindrische Schulter.

Zur Verminderung der Eigenschwingfähigkeit des Balgs kann der Balg mehrwandig, vorzugsweise mit drei Wandlagen ausgebildet sein. Die Reibung zwischen den einzelnen Wandlagen bei Schwingungsbewegungen des Balgs sorgt für die innere Dämpfung dieser Bewegungen.

Besondere Vorteile entfaltet die Erfindung dann, wenn der Balg eine hohe Eigensteifigkeit aufweist, und zwar derart, dass seine Eigenfrequenz höher als die Anregungsfrequenzen des Verbrennungsmotors und/oder von dessen Nebenaggregaten liegt. Insbesondere weil hierdurch die Gefahr von Resonanzschwingungen eliminiert ist, wird eine zusätzliche Dämpfung des Balgs durch einen Gestrickemantel oder Gestrickeschlauch verzichtbar. Dies ermöglicht, dass die gesamte Konstruktion - wenn der Balg selbst so hergestellt ist, dass er ein im wesentlichen lineares Schwingungsverhalten aufweist - insgesamt ein lineares Schwingungsverhalten zeigt: Auch die Anbindung des Balgs an das stromaufwärts liegende, erste Leitungsteil über die am Ringwulst angeordnete, erfindungsgemäße Klemmverbindung erzeugt keinerlei Nichtlinearitäten, da der Übergang vom ersten Leitungsteil zum Ringwulst und vom Ringwulst zum Balg nicht mit einer inneren Dämpfung behaftet ist.

Bei Leitungselementen gemäß dem eingangs erwähnten Stand der Technik sind dagegen Nichtlinearitäten bisher nicht zu vermeiden gewesen, sei es durch den den Balg umhüllenden Gestrickeschlauch oder durch die über einen elastischen Ring erfolgende Klemmung, so dass die bekannten Abkoppelelemente bzw. Rohrverbindungselemente insgesamt bislang immer ein nicht zu vernachlässigendes, nichtlineares Schwingungsverhalten aufwiesen.

Da man insbesondere in der Kraftfahrzeugindustrie bestrebt ist, die Entwicklungszeiten für neue Produkte zu verkürzen und hierzu möglichst viele Entwicklungsschritte mittels Rechnersimulation vorzunehmen, kann ein lineares Schwingungsverhalten der Fahrzeugteile, insbesondere auch der Abgasanlage, erwünscht sein. Denn nur dann kann durch Computersimulation ein Ergebnis errechnet werden, das der Wirklichkeit in ausreichendem Maß entspricht.

Diese besonders vorteilhafte Ausgestaltung der Erfindung schließt selbstredend nicht aus, dass es für besondere Anwendungsfälle zweckmäßig sein kann, den Balg in bekannter Weise mit einem Geflecht und/oder einem Gestricke zu umhüllen.

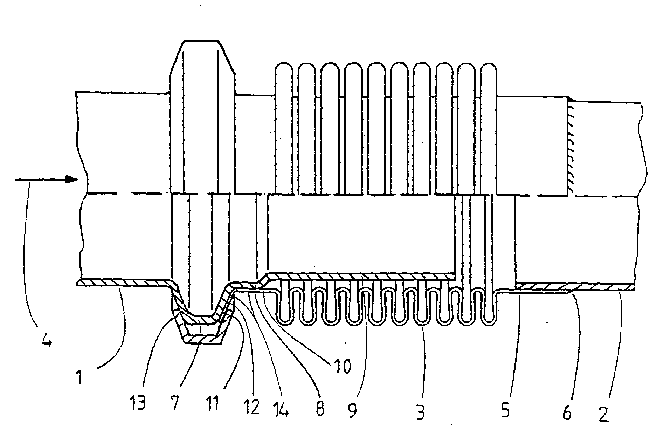

Ein Ausführungsbeispiel der Erfindung wird im folgenden anhand der beigefügten Zeichnung beschrieben und näher erläutert.

Die beigefügte einzige Figur ist eine teilgeschnittene Seitenansicht eines Abkoppelelements gemäß der vorliegenden Erfindung. Zwischen einem ersten, stromaufwärts liegenden Leitungsteil 1 und einem stromabwärts liegenden, zweiten Leitungsteil 2 einer Abgasleitung eines Kraftfahrzeug-Verbrennungsmotors ist ein ringgewellter Balg 3 eingesetzt, um Schwingungen abzukoppeln und Relativbewegungen der beiden Leitungsteile 1 und 2 auszugleichen. Mit dem Bezugszeichen 4 ist die Strömungsrichtung der Abgase bezeichnet. Der Balg 3 ist stromabwärts mit einem einstückig angeformten, zylindrischen Anschlussende 5 versehen, welches auf das zweite Leitungsteil 2 aufgeschoben und an diesem mittels einer Schweißnaht 6 festgelegt ist.

Das erste Leitungsteil 1 ist im Bereich seines an den Balg 3 anzuschließenden Endes zu einem V-förmigen Ringwulst 7 verformt und setzt sich dann stromabwärts über eine zylindrische Schulter 8 in ein Flammrohr 9 mit verkleinertem Außenradius fort. Das Flammrohr 9 reicht in das innere des Balges 3 hinein und schützt ihn so gegen die heißen Abgase. Ferner verbessert das Flammrohr 9 die Durchströmung des Abkoppelelements, indem der Gasstrom mit einer glatten Rohrinnenwandung umgeben wird. Das Flammrohr 9 ist so dimensioniert, dass zwischen seinem Ende und dem zweiten Leitungsteil 2 sowie zwischen seiner Außenwandjung und den Innenwellen des Balgs 3 jeweils ein lichter Raum verbleibt, welcher gewährleistet, dass das Flammrohr 9 bei allen üblicherweise auftretenden Relativbewègungen der beiden Leitungsteile 1 und 2 nicht an die Innenwellen des Balges 3 oder an das zweite Leitungsteil 2 anstößt.

Die Anbindung des Balgs 3 an das erste Leitungsteil 1 erfolgt über eine lösbare Klemmverbindung. Diese wird dadurch gebildet, dass der Balg 3 auch an seinem stromaufwärts liegenden Ende einen einstückig angeformten, hohlzylindrischen Anschlussstutzen 10 aufweist, der endständig mit einem konisch aufgebördelten, umlaufenden Bund 11 versehen ist. Der Ringwulst 7 weist zum Balg 3 hin eine passende konische Anlagefläche 12 für den Bund 11 auf, an welche der Bund 11 angesetzt ist. Mittels einer V-förmigen Profilschelle 13, die auf den Ringwulst 7 aufgesetzt ist, wird der Bund 11 des Balgs 3 gasdicht mit dem Ringwulst 7 des ersten Leitungsteils 1 verspannt.

Wie in der Zeichnung gut zu erkennen, bilden die zylindrische Schulter 8 des ersten Leitungsteils 1 und die Anlagefläche 12 des Ringwulstes 7 zusammen eine Zentrierfläche 14 für den Balg 3, der im dargestellten, fertig montierten Zustand mit seinem Anschlussstutzen 10 und seinem aufgebördelten Bund 11 an der Zentrierfläche 14 anliegt und dadurch in allen drei Raumrichtungen zentriert ist.

Es lässt sich erkennen, wie einfach und dennoch präzise die Montage des erfindungsgemäßen Abkoppelelements von statten geht: Der bereits mit dem zweiten Leitungsteil 2 verschweißte Balg 3 wird über das Flammrohr 9 gestülpt, wobei der aufgebördelte Bund 11 des stromaufwärtsliegenden Anschlussstutzens 10 des Balgs 3 gegebenenfalls als Fangschräge dient. Das Flammrohr 9 weitet sich dann zur zylindrischen Schulter 8 auf, auf welche sich der Anschlussstutzen 10 schiebt, bis dessen aufgebördelter Bund 11 auf die Anlagefläche 12 des Ringwulstes 7 zu liegen kommt. Hierdurch zentriert sich das Flammrohr 9 von selbst in die korrekte Einbaulage innerhalb des Balgs 3. Schließlich ist nur noch die Profilschelle 13 auf den Ringwulst 7 zu setzen und dort zu verspannen, um die Montage zu beenden.

## Patentansprüche

1. Abkoppelement zur Abkopplung von Schwingungen in einer Abgasleitung eines Verbrennungsmotors, mit einem schraubengangförmigen oder ringgewellten, metallischen Balg (3), der zwischen einem stromaufwärts angeordneten, ersten Leitungsteil (1) und einem stromabwärts angeordneten, zweiten Leitungsteil (2) eingesetzt ist,
dadurch gekennzeichnet,
dass das erste Leitungsteil (1) im Bereich seines an den Balg (3) anzuschließenden Endes mit einem Ringwulst (7) versehen ist,
dass sich das erste Leitungsteil (1), stromabwärts des Ringwulstes (7), in ein in den Balg (3) hineinreichendes, gegenüber den Innenwellen des Balgs (3) berührungsloses Flammrohr (9) fortsetzt,
dass im Übergangsbereich zwischen dem Ringwulst (7) und dem Flammrohr (9) eine Zentrierfläche (14) vorgesehen ist,
und dass der Balg (3) am Ringwulst (7) mittels einer Klemmverbindung (7, 11, 13) lösbar mit dem ersten Leitungsteil (1) verbunden ist, während er an der Zentrierfläche (14) anliegt.

2. Abkoppelelement nach Anspruch 1,
dadurch gekennzeichnet,
dass das Flammrohr (9) einstückig am ersten Leitungsteil (1) angeformt ist.

3. Abkoppelelement nach einem der Ansprüche 1 oder 2,
dadurch gekennzeichnet,
dass die Klemmverbindung mittels einer passend auf den Ringwulst (7) aufsetzbaren Profilschelle (13) herstellbar ist.

4. Abkoppelelement nach Anspruch 3,
dadurch gekennzeichnet,
dass der Ringwulst (7) als V-Bord und die Profilschelle (13) als V-Schelle ausgebildet sind.

5. Abkoppelement nach einem der Ansprüche 3 oder 4,
dadurch gekennzeichnet,
dass der Balg (3) an seinem zum ersten Leitungsteil (1) weisenden Ende zu einem kegelförmig nach außen weisenden, umlaufenden Bund (11) aufgebördelt ist, und dass der Ringwulst (7) des ersten Leitungsteils (1) eine passende konische Anlagefläche (12) für den Bund (11) aufweist, wobei der Bund (11) durch die Profilschelle (13) mit dem Ringwulst (7) verspannbar ist.

6. Abkoppelelement nach Anspruch 5,
dadurch gekennzeichnet,
dass die konische Anlagefläche (12) Teil der Zentrierfläche (14) ist.

7. Abkoppelelement nach einem der Ansprüche 1 bis 6,
dadurch gekennzeichnet,
dass die Zentrierfläche (14) eine zwischen dem Ringwulst (7) und dem Flammrohr (9) angeordnete, zylindrische Schulter (8) umfasst.

8. Abkoppelelement nach einem der Ansprüche 1 bis 7,
dadurch gekennzeichnet,
dass der Balg (3) mehrwandig ausgebildet ist.

9. Abkoppelement nach einem der Ansprüche 1 bis 8,
dadurch gekennzeichnet,
dass der Balg (3) eine hohe Eigensteifigkeit aufweist, so dass seine Eigenfrequenz höher als die Anregungsfrequenzen des Verbrennungsmotors und/oder von dessen Nebenaggregaten liegt.

10. Abkoppelelement nach Anspruch 9,
dadurch gekennzeichnet,
dass der Balg (3) ein im wesentlichen lineares Schwingungsverhalten aufweist.

11. Abkoppelelement nach einem der Ansprüche 1 bis 10,
dadurch gekennzeichnet,
dass der Balg (3) mit einem Geflecht und/oder einem Gestricke umhüllt ist.
